(19) Europäisches Patentamt / European Patent Office / Office européen des brevets

(11) **EP 3 039 389 B1**

(12) **EUROPÄISCHE PATENTSCHRIFT**

(45) Veröffentlichungstag und Bekanntmachung des Hinweises auf die Patenterteilung:
**19.06.2019   Patentblatt 2019/25**

(21) Anmeldenummer: **14736814.6**

(22) Anmeldetag: **08.07.2014**

(51) Int Cl.:
*G01F 23/296* (2006.01)     *G01N 9/24* (2006.01)
*G01N 11/16* (2006.01)     *G01N 29/036* (2006.01)

(86) Internationale Anmeldenummer:
**PCT/EP2014/064593**

(87) Internationale Veröffentlichungsnummer:
**WO 2015/028179 (05.03.2015 Gazette 2015/09)**

(54) **VORRICHTUNG ZUR BESTIMMUNG ODER ÜBERWACHUNG EINER PROZESSGRÖSSE DER AUTOMATISIERUNGSTECHNIK**

APPARATUS FOR DETERMINING AND/OR MONITORING AN AUTOMATING TECHNOLOGY PROCESS VARIABLE

DISPOSITIF DE DÉTERMINATION OU DE SURVEILLANCE D'UNE GRANDEUR DE PROCESSUS EN AUTOMATISME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2013   DE 102013109331**

(43) Veröffentlichungstag der Anmeldung:
**06.07.2016   Patentblatt 2016/27**

(73) Patentinhaber: **Endress+Hauser SE+Co. KG**
**79689 Maulburg (DE)**

(72) Erfinder:
• **LOPATIN, Sergej**
**79540 Lörrach (DE)**

• **KUHNEN, Raphael**
**79418 Schliengen (DE)**
• **FRÜHAUF, Dietmar**
**79539 Lörrach (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A2- 1 239 267     DE-A1- 4 327 167
DE-C2- 3 207 305     US-A- 4 770 038
US-A- 6 079 266     US-B2- 7 598 820

**Beschreibung**

Die Erfindung bezieht sich auf eine Vorrichtung zur Bestimmung oder Überwachung eines vorgegebenen Füllstandes (Grenzstand), der Dichte oder der Viskosität eines Mediums in einem Behälter, mit einer schwingfähigen Einheit, die auf der Höhe des vorbestimmten Füllstandes angebracht ist oder die so in dem Behälter angebracht ist, dass sie bis zu einer definierten Eintauchtiefe in das Medium eintaucht, wobei eine Sende-/Empfangseinheit vorgesehen ist, die die schwingfähige Einheit mit einer vorgegebenen Erregerfrequenz zu Schwingungen anregt und die die Schwingungen der schwingfähigen Einheit empfängt, und wobei eine Regel-/Auswerteeinheit vorgesehen ist, die das Erreichen des vorbestimmten Füllstandes signalisiert oder die Dichte bzw. die Viskosität des Mediums ermittelt. Entsprechende Sensoren werden auch als Vibrationssensoren oder als vibronische Sensoren bezeichnet.

Aus dem Stand der Technik sind Patentschriften US 6 079 266 A, EP 1 239 267 A2, DE 43 27 167 A1, US 7 598 820 B2, US 4 770 038 A und DE 32 07 305 C2 bekannt, die jeweils einen Vibrationssensor zur Bestimmung eines vorgegebenen Füllstandes bzw. eines Füllstandes offenbaren.

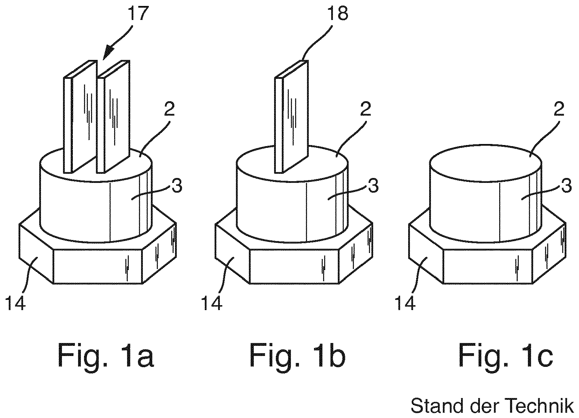

Die schwingfähige Einheit kann je nach Anwendung unterschiedlich ausgestaltet sein: als Schwinggabel mit zwei symmetrisch an einer Membran angeordneten Gabelzinken (Fig. 1a), als Einstab, bei dem lediglich eine Zinke mittig an einer Membran angeordnet ist (Fig. 1b) oder als Membran als solche (Fig. 1c). Vibrationssensoren mit Schwinggabeln werden in Flüssigkeiten, Gasen und Feststoffen eingesetzt und von der Anmelderin unter der Bezeichnung LIQUIPHANT angeboten und vertrieben. Unter der Bezeichnung SOLIPHANT sind Vibrationssensoren mit einem Einstab bekannt geworden. Diese sind hauptsächlich für den Einsatz in Feststoffen ausgewiesen. Aus der DE 10 2005 044 725 A1 ist darüber hinaus eine Ausgestaltung eines Membranschwingers bekannt geworden, der für den Einsatz in unterschiedlichsten Medien geeignet ist.

Vibronische Sensoren schwingen auf einer definierten Resonanzfrequenz - führen also eine harmonische Schwingung aus. Die Resonanzfrequenz ist durch die Konstruktion des Sensors und die verwendeten Werkstoffe bestimmt. Jede Schwingung lässt sich über die Frequenz und die Dämpfung charakterisieren. Schwingt die schwingfähige Einheit in einem flüssigen Medium mit einer hohen Dichte, so hat die Mediumsdichte als mitbewegte Masse einen Einfluss auf die schwingfähige Einheit. Folglich liegt die Schwingfrequenz in einem flüssigen Medium tiefer als in einem gasförmigen Medium. Eine Frequenzänderung zeigt somit beispielsweise den Übergang von einem gasförmigen zu einem flüssigen Medium an. Weiterhin hat die Dämpfung des Mediums einen Einfluss auf die Schwingungen eines vibronischen Sensors. Schüttgüter wie Weizen oder Reis dämpfen die Schwingungen der schwingfähigen Einheit eines Vibrationssensors und verursachen eine drastische Amplitudensenkung beim Übergang Luft/Schüttgut.

Als Grenzstandmessgeräte ausgebildete Vibrationssensoren nutzen somit den Effekt aus, dass sowohl die Schwingungsfrequenz als auch die Schwingungsamplitude abhängig sind von dem jeweiligen Bedeckungsgrad des Schwingelements: Während das Schwingelement in Luft frei und ungedämpft seine Schwingungen ausführen kann, erfährt es eine Frequenz- und Amplitudenänderung, sobald es teilweise oder vollständig in das Medium eintaucht. Anhand einer vorbestimmten Frequenzänderung (üblicherweise wird die Frequenz gemessen) lässt sich folglich ein eindeutiger Rückschluss auf das Erreichen des vorbestimmten Füllstandes des Mediums in dem Behälter ziehen. Die Frequenzänderung in nicht dämpfenden Medien wie Gasen und dünnflüssigen Flüssigkeiten hängt von der Mediumsdichte ab. Die Frequenzänderung ist ausreichend, um das Medium zu erkennen und die Dichte auszuwerten. Füllstandsmessgeräte werden übrigens vornehmlich als Überfüllsicherungen oder zum Zwecke des Pumpenleerlaufschutzes verwendet.

Wie bereits gesagt, wird die Dämpfung der Schwingung der schwingfähigen Einheit überwiegend durch die Reibungskräfte zwischen den festen Partikeln oder Molekülen des jeweiligen Mediums bestimmt. Daher besteht bei konstantem Bedeckungsgrad eine funktionale Beziehung zwischen der Schwingungsamplitude und der Dichte des Schüttguts (die Reibung in schweren Schüttgütern mit einer hohen Schüttgutdichte ist höher als in leichten) oder zwischen der Schwingungsamplitude und der Viskosität, so dass Vibrationssensoren sowohl für die Füllstands- als auch für die Dichtebestimmung in Schüttgüter geeignet sind. Weiterhin werden vibronische Sensoren zur Bestimmung der Viskosität eines flüssigen Mediums eingesetzt.

Die Schwingungen eines Vibrationssensors werden von einem elektro-mechanischen Wandler erzeugt. Bei dem elektromechanischen Wandler handelt es sich üblicherweise um einen Piezoantrieb mit zumindest einem piezoelektrischen Element. Der Piezoantrieb regt im Vibrationssensor harmonische Schwingungen auf einer Resonanzfrequenz an und kompensiert die Energieverluste, die in der schwingfähigen Einheit auftreten. Mit Piezoantrieben lässt sich ein hoher Wirkungsgrad erzielen. Da die Energiezufuhr relativ gering ist, ist ein breiter Einsatz in der Automatisierungstechnik möglich. Weitere Information findet sich beispielsweise in der DE 10 2008 050 266 A1. Vielfach werden sogenannte Stapelantriebe als Piezoantriebe eingesetzt. Bei Stapelantrieben sind mehrere scheibenförmige piezoelektrische Elemente übereinander gestapelt angeordnet. Darüber hinaus werden zur Schwingungserzeugung und Schwingungsdetektion Bimorphantriebe verwendet. Prinzipiell besteht ein Bimorphantrieb aus einem mit der Membran kraftschlüssig verbundenen scheibenförmigen piezoelektrischen Element, das in zumindest zwei flächigen Bereichen eine Polarisation aufweist. In der EP 0 985 916 A1 und der EP 1 281 051 B1 sind unterschiedliche Ausgestaltungen von Bimorphantrieben beschrieben.

Im Falle der Füllstandsbestimmung überwacht die Auswerteeinheit die Schwingungsfrequenz und/oder die Schwingungsamplitude des Schwingelements und signalisiert den Zustand 'Sensor bedeckt' bzw. 'Sensor unbedeckt', sobald die Messsignale einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Die Piezotechnologie auf der Basis von piezokeramischen Werkstoffen auf PZT-Basis (Bleizirkonattitanat) ist bestens für den Einsatz bei Temperaturen bis 300°C geeignet. Zwar gibt es piezokeramische Werkstoffe, die auch bei Temperaturen oberhalb von 300°C ihre piezoelektrischen Eigenschaften bewahren; diese haben jedoch den Nachteil, dass sie deutlich ineffektiver sind als die Werkstoffe auf PZT-Basis. Für den Einsatz in Vibrationssensoren sind diese Hochtemperaturwerkstoffe wenig geeignet.

Das Haupthindernis für die Verwendung von piezokeramischen Werkstoffen in Vibrationssensoren bei Temperaturen oberhalb von 300°C beruht auf den großen Unterschieden in den thermischen Ausdehnungskoeffizienten von Metallen und keramischen Stoffen. Die piezokeramischen Elemente haben in Vibrationsantrieben die Funktion von Kraftgebern: Daher müssen die piezoelektrischen bzw. piezokeramischen Elemente kraftschlüssig mit der Membran, die üblicherweise aus Edelstahl gefertigt ist, verbunden sein. Aufgrund der unterschiedlichen thermischen Ausdehnungskoeffizienten bauen sich in den piezokeramischen Elementen mit steigender Temperatur letztendlich so hohe mechanische Spannungen auf, dass sie brechen - die Folge davon ist ein Totalausfall des Vibrationssensors.

Um diese Probleme zu umgehen, werden in der WO 2007/113011 und in der WO 2007/114950 A1 Vibrationssensoren mit einem speziellen elektromagnetischem Antrieb beschrieben. Wesentliche Komponenten des elektromagnetischen Antriebs sind eine Spule und ein Permanentmagnet. Wird der elektromagnetische Antrieb mit einem Wechselspannungssignal beaufschlagt, so wird ein magnetisches Wechselfeld erzeugt. Infolge des magnetischen Wechselfelds wirkt eine periodische Kraft auf die schwingfähige Einheit des Vibrationssensors und regt sie zu Schwingungen an. Bei dem bekannten Sensor erfolgt die Umwandlung von elektrischer Energie in mechanische Energie über ein Magnetfeld. Bei einem elektromagnetischen Antrieb sind die Unterschiede der thermischen Ausdehnungskoeffizienten von den im Sensor verarbeiteten Materialen nur von untergeordneter Bedeutung. Da im Gegensatz zu den piezoelektrischen Antrieben auf eine kraftschlüssige Verbindung zwischen zwei völlig unterschiedlichen Werkstoffen, wie z.B. der Edelstahlmembran und der Piezokeramik, verzichtet werden kann, ist ein Vibrationssensor mit einem elektromagnetischen Antrieb auch in einem höheren und breiteren Temperaturbereich, insbesondere bei Temperaturen zwischen -200°C und 450-500°C einsetzbar.

Der Nachteil bei den bekannten Vibrationssensoren mit elektromagnetischem Antrieb ist darin zu sehen, dass ein Permanentmagnet in Wechselwirkung mit einer Spule als Kraftgeber einen deutlich geringeren Wirkungsgrad hat als ein Piezoantrieb. Zwar entwickelt der elektromagnetische Antrieb im Bereich der Membran relativ hohe Kräfte, jedoch ist die Auslenkung der Schwinggabel infolge der nicht-kraftschlüssigen-Verbindung zwischen Membran und Antrieb gering. Als Folge davon benötigt ein Vibrationssensor mit elektromagnetischem Antrieb im Vergleich zu einem Vibrationssensor mit Piezoantrieb mehr Energie, was seinen Einsatz in explosionsgefährdeten Bereichen problematisch macht.

Aus der US-A 3,256,738 ist ein magnetostriktiver Sensor zur Detektion des Grenzstands eines Mediums in einem Behälter bekannt geworden. Das Sensorgehäuse ist auch hier an seiner Unterseite mit einer Membran verschlossen. Eine rohrförmige Komponente aus einem magnetostriktiven Material erstreckt sich ins Gehäuseinnere und ist in einem ihrer Endbereich kraftschlüssig mit dem mittleren Bereich der Membran verschweißt. Der zweite Endbereich der rohrförmigen Komponente ist frei. Im Außenbereich der rohrförmigen magnetostriktiven Komponente befinden sich als Sende-/Empfangseinheit zwei Spulen mit einem dazwischen liegenden ringförmigen Permanentmagneten. Bei der bekannten Lösung werden Röhrchen aus magnetostriktivem Material zu longitudinalen Resonanzschwingungen angeregt. Longitudinal schwingende Resonatoren weisen eine hohe mechanische Güte auf und reagieren mit einer Amplitudenänderung, sobald sie in Kontakt mit dem zu überwachenden Medium kommen. Der bekannte Sensor wird zu Resonanzschwingungen angeregt, indem die Röhrchenlänge im harmonischen Magnetfeld verändert wird.

Der Nachteil des bekannten magnetostriktiven Sensors ist darin zu sehen, dass er nicht mechanisch von der Behälterwand entkoppelt ist. Je nach Anschluss besteht die Gefahr, dass er ausfällt. Zur Anregung von Schwingungen in Vibrationssensoren der Anmelderin, die als Sicherungen eingesetzt werden, ist der bekannt gewordene elektromagnetische Antrieb nicht geeignet.

Der Erfindung liegt die Aufgabe zugrunde, einen Vibrationssensor für den Einsatz im Hochtemperaturbereich vorzuschlagen. Unter Hochtemperatur-bereich wird in Verbindung mit der Erfindung insbesondere der Bereich oberhalb von 300°C verstanden.

Die Aufgabe wird dadurch gelöst, dass ein scheibenförmiges Element aus einem magnetostriktiven Material vorgesehen ist, das mit der Innenfläche der Membran kraftschlüssig verbunden ist. Das scheibenförmige Element aus dem magnetostriktiven Material kann kreisförmig, ringförmig oder rechteckförmig ausgestaltet sein. Bei der Sende-/Empfangseinheit handelt es sich um einen elektromagnetischen Antrieb, derwie bereits zuvor erwähnt - problemlos für den Einsatz im Hochtemperaturbereich geeignet ist.

Magnetostriktive Stoffe sind typischerweise metallische Legierungen, die magnetisch, insbesondere ferromagnetisch sind. Bei Anlegen eines magnetischen Feld ändern sie elastisch ihre Länge. Dieser Effekt wird auch als Joule-Magnetostriktion bezeichnet.

Der große Vorteil der magnetostriktiven Stoffe ist, dass sie sich problemlos kraftschlüssig mit der Metallmembran eines Vibrationssensors verbinden lassen. Beispielsweise kann die kraftschlüssige Verbindung über ein Lot erfolgen. Bei gelöteten Fügestellen lässt sich eine hervorragende Kraftübertragung je nach verwendetem Lot durchaus bei Temperaturen bis 700-900°C erreichen. Selbstverständlich ist es auch möglich, die kraftschlüssige Verbindung über einen (z.B. Laser-) Schweiß- oder Klebeprozess zu realisieren. Daher ist es möglich, den erfindungsgemäßen Vibrationssensor auch bei Temperaturen oberhalb 300°C einzusetzen.

Aufgrund der kraftschlüssigen Verbindung (flächig oder z.B. nur im Außenbereich des scheibenförmigen magnetostriktiven Materials) zwischen dem scheibenförmigen magnetostriktiven Material und der Membran ist die Kraftübertragung ausgezeichnet. Daher ist der Wirkungsgrad zwischen der elektromagnetischen Anregung und der durch sie ausgelösten mechanischen Schwingung sehr groß. Folglich benötigt der erfindungsgemäße Vibrationssensors vergleichsweise wenig Energie, so dass er auch für den Einsatz in explosionsgefährdeten Bereichen der Automatisierungstechnik geeignet sein kann.

Ein weiterer Vorteil des erfindungsgemäßen Vibrationssensors ist sein kompakter und kostengünstiger Aufbau.

Beispiele für magnetostriktive Materialien, die in Verbindung mit der erfindungsgemäßen Lösung verwendet werden können, sind reines Nickel (Ni) mit einer Curie-Temperatur von 358°C, Kobalt (Co) mit einer Curie-Temperatur von 1120°C, Terbium-Eisen (TbFe2), das bis 424°C einsetzbar ist, oder eine als Terfenol-D bezeichnete Legierung, die bis 380°C ihre magnetostriktiven Eigenschaft beibehält. Die genannten magnetostriktiven Werkstoffe haben unterschiedliche magnetostriktive Koeffizienten. Bevorzugt werden in Verbindung mit der Erfindung Werkstoffe eingesetzt, die neben einer ausreichend hohen Magnetostriktion auch eine hohe Curie-Temperatur aufweisen. Für Anwendungen bis 400°C kann z.B. eine Kombination aus Hochtemperatur-Edelstahl und Kobalt oder TbFe2 verwendet werden. Zum Löten ist eine harte Metallverbindung, insbesondere ein Standardlot auf z.B. Nickelbasis mit einer Löttemperatur von ca. 950°C bestens geeignet.

Gemäß einer vorteilhaften Ausgestaltung des erfindungsgemäßen Vibrationssensors handelt es sich bei dem elektromagnetischen Antrieb um eine modular aufgebaute Einheit, die im Innern des Gehäuses befestigt ist. Die Art der Befestigung kann beliebig sein. Die kraftschlüssige Verbindung zur Membran, die bei einem piezoelektrischen Antrieb unabkömmlich ist, entfällt.

Der elektromagnetische Antrieb besteht aus zumindest einer Spule, zumindest einem das Magnetfeld der Spule verstärkenden Spulenkern und zumindest einem Permanentmagneten. Der Permanentmagnet ist bevorzugt ringförmig ausgestaltet und im Außenbereich der Spule angeordnet. Der elektromagnetische Antrieb ist so innerhalb des Gehäuses angeordnet, dass zwischen dem scheibenförmigen Element aus magnetostriktivem Material und dem entsprechenden Endbereich des elektromagnetischen Antriebs ein Spalt gebildet ist. Bevorzugt weist der Spalt eine Dicke von 0.1-1 mm auf.

Eine vorteilhafte Ausgestaltung des erfindungsgemäßen Vibrationssensors sieht vor, dass die Magnetfeldstärke bei Verwendung eines Permanentmagneten so gewählt ist, dass sie in einem Bereich liegt, in dem die relative Ausdehnung bzw. die relative Längen- bzw. Durchmesseränderung des magnetostriktiven Materials des scheibenförmigen Elements in Abhängigkeit von der Magnetfeldstärke des elektromagnetischen Antriebs eine hohe oder eine maximale Steigung aufweist. Durch die Vormagnetisierung mittels des Permanentmagneten lässt sich der optimale Arbeitspunkt des Vibrationssensors definieren.

Gemäß einer vorteilhaften Ausgestaltung braucht es keinen Permanentmagneten. In diesem Fall wird ein magnetostriktives Material gewählt, dessen Magnetostriktionskurve im Bereich des Nullpunkts bereits eine so hohe Steigung aufweist, dass das magnetische Wechselfeld des elektromagnetischen Antriebs zur Erzeugung der Erregerfrequenz geeignet ist.

Darüber hinaus sieht eine vorteilhafte Ausgestaltung des erfindungsgemäßen Vibrationssensors vor, dass die angrenzenden Endbereiche von Spulenkern und scheibenförmigem magnetostriktivem Element so ausgestaltet sind, dass die Magnetfeldlinien im Innenbereich von Spulenkern und scheibenförmigem magnetostriktivem Element im Wesentlichen planparallel, bei Zylindersymmetrie radial verlaufen. Hierdurch lässt sich der Wirkungsgrad optimieren. Zusätzlich oder alternativ ist das scheibenförmige magnetostriktive Material aus Einzellagen zusammenlaminiert. Hierdurch wird der Entstehung von Wirbelströmen effektiv entgegen gewirkt.

Die Erfindung wird anhand der nachfolgenden Figuren näher erläutert. Es zeigt:

Fig. 1a: eine schematische Darstellung eines aus dem Stand der Technik bekannten Vibrationssensors mit einer Schwinggabel,

Fig. 1b: eine schematische Darstellung eines aus dem Stand der Technik bekannten Vibrationssensors mit einem Einstab,

Fig. 1c: eine schematische Darstellung eines aus dem Stand der Technik bekannten Vibrationssensors, der als Membranschwinger ausgestaltet ist,

Fig. 2: einen Längsschnitt durch eine Ausgestaltung des erfindungsgemäßen Vibrationssensors in schematischer Darstellung,

Fig. 2a: einen vergrößerte Darstellung der Membran mit appliziertem magnetostriktivem Element aus Fig. 2,

Fig. 2b: die in Fig. 2a gezeigte Membran mit appliziertem magnetostriktivem Element bei Beaufschlagung mit einem elektromagnetischen Feld,

Fig. 3: ein Diagramm, das die Längenausdehnung eines magnetostriktiven Materials in Abhängigkeit von der magnetischen Feldstärke zeigt.

Fig. 4: ein Längsschnitt durch eine Ausgestaltung des erfindungsgemäßen Vibrationssensors mit optimierter Magnetisierungsgeometrie.

In den Figuren Fig. 1a, Fig. 1b und Fig. 1c sind schwingfähige Einheiten 2 von aus dem Stand der Technik bekannt gewordenen Vibrationssensoren 1 schematisch dargestellt.

Bei Fig. 1a besteht die schwingfähige Einheit 2 aus einer Membran 3 und einer Schwinggabel 17. Bei Fig. 1b ist an der Membran 3 ein Einstab 18 befestigt. Fig. 1c visualisiert einen Membranschwinger, bei dem die schwingfähige Einheit 2 nur durch die Membran 3 gebildet ist.

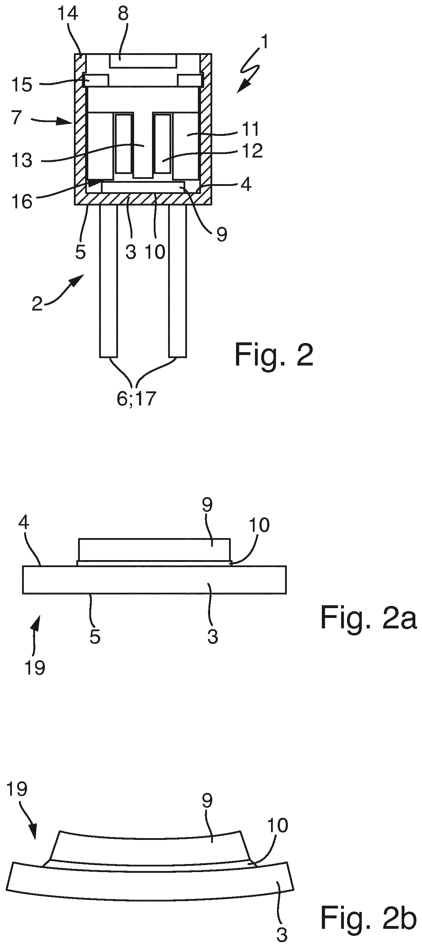

Fig. 2 zeigt einen Längsschnitt durch eine Ausgestaltung des erfindungsgemäßen Vibrationssensors 1 mit einem magnetostriktiven Bimorphelement 19 in schematischer Darstellung. Das Bimorphelement 19 besteht aus einem im Wesentlichen scheibenförmigen Element 9 aus einem magnetostriktiven metallischen Werkstoff, der über eine kraftschlüssige Verbindung 10, insbesondere eine Löt-, Schweiß- oder Klebeverbindung, mit der Membran 3 gekoppelt ist. Das Bimorphelement 19 verschließt das rohrförmige Sensorgehäuse 14 in einem seiner beiden Endbereiche. In dem Sensorgehäuse 14 ist oberhalb des scheibenförmigen Elements 9 bzw. oberhalb des Bimorphelements 19 ein elektromagnetischer Antrieb 7 angeordnet. Der elektromagnetische Antrieb 7 besteht im dargestellten Fall aus einer Spule 12 mit einem Spulenkern 13 und einem im Außenbereich der Spule 12 angeordneten bevorzugt ringförmig ausgestalteten Permanent-magneten 11. Es versteht sich von selbst, dass es sich bei dem Permanentmagneten 11 auch um einen scheibenförmigen Ringmagneten handeln kann.

Der Spulenkern 13 ist aus einer ferromagnetischen Legierung gefertigt. Bevorzugt ist er so ausgestaltet, dass die Bildung von Wirbelströmen auf ein Mindestmaß reduziert ist. Bevorzugt ist der elektromagnetische Antrieb 7 als modulare Einheit aufgebaut. Über ein bevorzugt metallisches Befestigungselement 15 ist der elektromagnetische Antrieb 7 in dem Sensorgehäuse 14 befestigt. Bei dem Befestigungselement 15 handelt es sich beispielsweise um ein Gewinde oder um einen Sprengring. Selbstverständlich ist es auch möglich, den elektromagnetischen Antrieb 7 in dem Sensorgehäuse 14 über einen Schweiß- oder Lötprozess zu befestigen.

Das scheibenförmige Element 9 aus einem magnetostriktiven Material ist von dem Permanentmagneten 11 und dem insbesondere ferromagnetischen Spulenkern 13 durch einen Spalt 16 getrennt. Bevorzugt liegt die Dicke des Spalts 16 im Bereich von 0,1-1,0 mm. Eine kraftschlüssige Verbindung, wie sie bei einem piezoelektrischen Antrieb unbedingt erforderlich ist, entfällt bei der erfindungsgemäßen Lösung.

Die Spule 12 wird über die Regel-/Auswerteeinheit 8 mit einem periodischen bzw. harmonischen Anregungsstrom gespeist. Hierdurch entsteht in Verbindung mit der konstanten Magnetfeldstärke $H_0$ des Permanentmagneten 11 ein harmonisches Magnetfeld $H=H_0+\Delta H$. Über dieses periodisch sich ändernde Magnetfeld H werden das Bimorphelement 19 und somit auch die schwingfähige Einheit 2 zu harmonischen Schwingungen angeregt.

Das harmonische Magnetfeld der Feldstärke $\Delta H$ bewirkt bei dem scheibenförmigen Element 9 eine periodische Änderung des Durchmessers $\Delta I$ im Takt der Anregungsfrequenz. Da das scheibenförmige Element 9 aus magnetostriktivem Material kraftschlüssig mit Membran 3 des Vibrations-sensors 1 gekoppelt ist, führt eine periodische Durchmesser- bzw. Längenänderung zu einer harmonischen Biegeschwingung des Bimorphelements 19. Gesteuert durch den Erregerstrom der Spule 12, wird der Vibrationssensor 1 somit zu Schwingungen mit einer gewünschten Schwingfrequenz, insbesondere mit Resonanzfrequenz, angeregt.

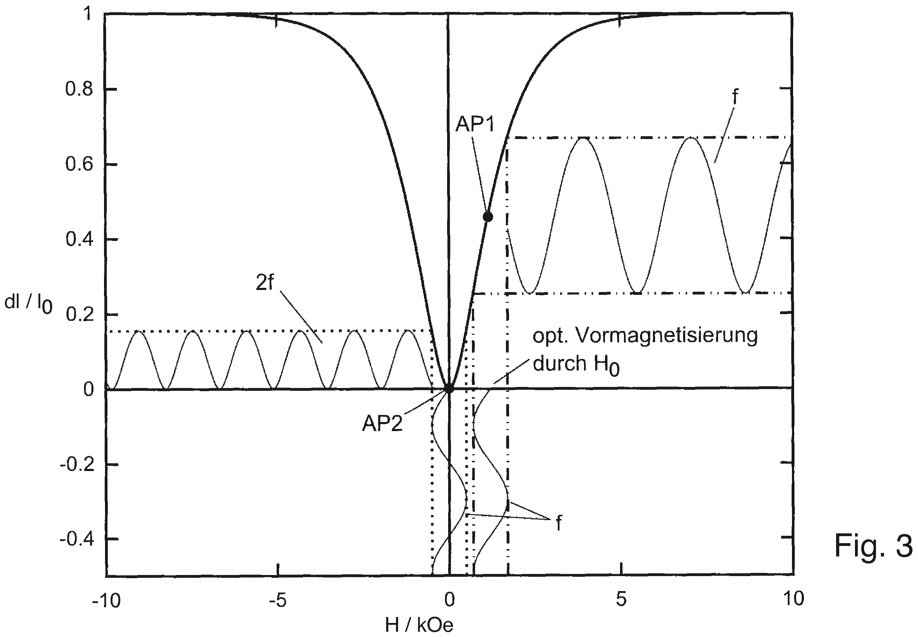

Das treibende Magnetfeld H setzt sich im gezeigten Fall zusammen aus dem Magnetfeld $H_0$ des Permanentmagneten 11 und dem Wechselmagnetfeld bzw. dem harmonischen Magnetfeld $\Delta H$ der Spule 12. Hierbei ist $\Delta H$ die Amplitude des Wechselmagnetfeldes, das dem konstanten Magnetfeld $H_0$ des Permanentmagneten 11 auf moduliert wird. Über das Magnetfeld $H_0$ des Permanentmagneten 11 wird - wie in Fig. 3 dargestellt - erreicht, dass der erfindungsgemäße Vibrationssensor im Arbeitspunkt AP1 arbeitet. Der Arbeitspunkt AP1 befindet sich bevorzugt in einem Bereich, in dem das Wechselmagnetfeld ΔH eine möglichst große Längen- bzw. Durchmesseränderung des magnetostriktiven Materials des scheibenförmigen Elements 9 bewirkt. Die Änderung des Durchmessers bzw. die Längenänderung Δl des magnetostriktiven Materials des scheibenförmigen Elements 9 im Bereich einer niedrigen Magnetfeldstärke H lässt sich mathematisch näherungsweise durch eine Parabel beschreiben. Die entsprechende Formel lautet:

$$\frac{\Delta l}{l_0} = \gamma \cdot H^2,$$

Hierbei ist $\frac{\Delta l}{l_0}$ die relative Ausdehnung des magnetostriktiven Werkstoffs bei Einwirken des harmonischen Magnetfeldes, $\gamma$ ist ein Koeffizient, der mit der magnetostriktiven Konstante $\lambda$ korreliert. Die obige Formel kann folgendermaßen umgeschrieben werden:

$$\frac{\Delta l}{l_0} = \gamma \cdot H^2 = \gamma \cdot (H_0 + \Delta H)^2 = \gamma \cdot (H_0^2 + 2\Delta H \cdot H_0 + \Delta H^2).$$

Der Term $\gamma \cdot H_0^2$ ist eine Konstante, die von der Magnetfeldstärke des harmonischen Magnetfelds mit der Amplitude ΔH unabhängig ist. Sie entspricht der Vordeformation des Bimorphelements 9, die infolge der magnetischen Feldstärke $H_0$ des Magnetfelds des Permanentmagneten 11 vorhanden ist. Der Term $\gamma \Delta H^2$ ist vernachlässigbar. Für die Anregung selbst ist der Term $\gamma 2\Delta H \cdot H_0$ relevant, der zeigt, dass eine maximale Steigung der Ausdehnung $\frac{\Delta l}{l_0}$ als Funktion der Feldstärke ΔH des harmonischen Magnetfeldes bei üblichen magnetostriktiven Materialien nur in Kombination mit der definierten Feldstärke eines Permanentmagneten 11 sinnvoll ist. Die Magnetfeldstärke $H_0$ des Permanentmagneten 11 ist für jedes magnetostriktive Material spezifisch und sollte bevorzugt bei der maximalen Steigung oder im Bereich der maximalen Steigung der in Fig. 3 dargestellten Ausdehnungskurve bzw. Magnetostriktionskurve liegen. Für die in Fig. 3 dargestellte Ausdehnungskurve liegt die die optimale Vormagnetisierung aufgrund der Magnetfeldstärke $H_0$ des Permanentmagneten 11 im Bereich zwischen 79,6 und 159,2 kA/m.

Die Magnetfeldstärke $H_0$ des Permanentmagneten 11 darf nicht so groß sein, dass die Feldstärke H des Magnetfeldes des elektromagnetischen Antriebs 7 im Bereich der Sättigung liegt. Da in diesem Bereich die Steigung der Ausdehnungskurve sehr gering ist, wäre auch die Schwingung der schwingfähigen Einheit 3 entsprechend gering. Sättigung tritt bei der in Fig. 3 gezeigten Ausgestaltung bei einer Magnetfeldstärke H von ca. 397,9 kA/m auf.

Die Anregung einer schwingfähigen Einheit 2 mit einem magnetostriktiven Bimorphelement 9 ist für den Einsatz bei allen Vibrationssensoren 1 geeignet, insbesondere auch für die in Fig. 1a, Fig. 1b und Fig. 1c gezeigten Vibrationssensoren 1. Ein entscheidender Vorteil bei der Kombination von Bimorph- und elektromagnetischem Antrieb ist, dass der erfindungsgemäße Vibrationssensor 1 auch für Anwendungen im Hochtemperaturbereich bestens geeignet ist. Der Einsatzbereich des erfindungsgemäßen Vibrationssensors ist letztlich nur beschränkt durch die Curie-Temperatur des Materials des Permanent-magneten 11, die Curie-Temperatur des Materials des magnetostriktiven Elements 9 und die Temperaturverträglichkeit des Materials, aus dem die Spule 12 gefertigt ist. Typischerweise kann die erfindungsgemäße Lösung jedoch mit den genannten kostengünstigen und verfügbaren Materialien zumindest im Temperaturbereich von 400-500°C betrieben werden. Der Temperaturbereich lässt sich zu höheren Temperaturen hin erweitern, wenn ein höherer Kostenaufwand für Materialien, die auch bei höheren Temperaturen noch verwendet werden können, nicht gescheut wird.

Wie aus den Figuren Fig. 2a und Fig. 2b ersichtlich ist, lässt sich die erfindungsgemäße Schichtstruktur (= Bimorphelement 19) aus einer Metallmembran 3 und einem scheibenförmigen Element 9 aus einer magnetostriktiven Legierung optimal in einem Bimorphelement 19 zur Erzeugung und zum Empfang von Schwingungen der schwingfähigen Einheit 2 verwenden. Die Membran 3 und das scheibenförmige magnetostriktive Element 9 sind bevorzugt als dünne Plättchen ausgebildet. Die kraftschlüssige Verbindung 10 im Bimorphelement 19 wird beispielsweise über eine Lötschicht aus einer harten Metalllegierung erreicht. Wie bereits zuvor erwähnt, lässt sich eine kraftschlüssige Verbindung 10 für den Einsatz im Hochtemperaturbereich auch über einen Schweiß- oder einen Klebeprozess realisieren.

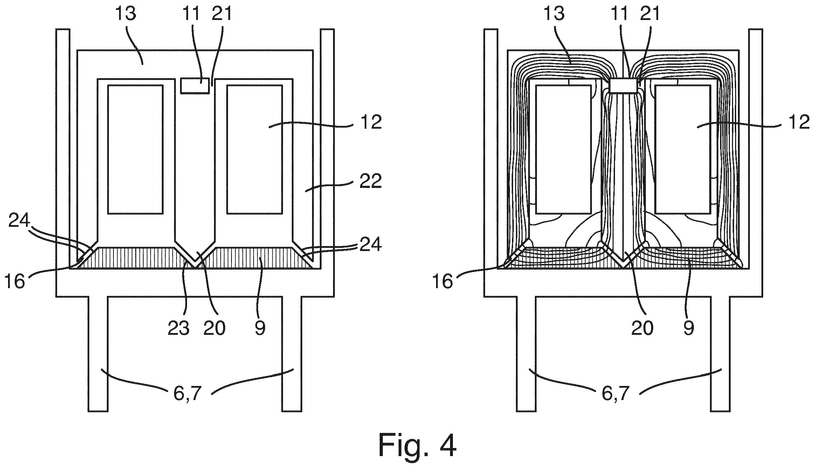

Die in den Figuren Fig. 2 und Fig. 4 gezeigten Lösungen nutzen einen Permanentmagneten 11, um den Arbeitspunkt AP1 des erfindungsgemäßen Vibrationssensors 1 in den Bereich zu ziehen, in dem die Längen- bzw. Durchmesseränderung des scheibenförmigen magnetostriktiven Elements 9 möglichst hoch ist. Bevorzugt wird die von dem jeweils verwendeten magnetostriktiven Material abhängige optimale Vormagnetisierung opt. $H_0$ anvisiert. Entsprechend ausgeprägt ist nachfolgend die durch das magnetische Wechselfeld $\Delta H$ angeregte Schwingungsamplitude des Vibrationssensors 1.

In Fig. 3 ist zusätzlich der Fall gezeigt, dass kein Permanentmagnet 11 verwendet wird. Bei einer derartigen Lösung liegt der Arbeitspunkt AP2 des Vibrationssensors 1 im Nullpunkt der Magnetostriktionskurve. Bevorzugt wird in diesem Fall ein magnetostriktive Material, wie beispielsweise eine als Galfenol bezeichnete Legierung, für das scheibenförmige Element 9 verwendet, das bereits im Bereich des Nullpunkts eine relative große Längen- bzw. Durchmesseränderung aufweist.

Wird ein entsprechendes Material verwendet, so bewirkt das magnetische Wechselfeld $\Delta H$ eine symmetrische Schwingung um den Nullpunkt herum. Wie in Fig. 3 gezeigt, ändert sich die Länge- bzw. der Durchmesser des magnetostriktiven Materials des scheibenförmigen Elements 9 mit einer Frequenz, die doppelt so hoch ist wie die Erregerfrequenz des magnetischen Wechselfelds $\Delta H$. Zwar lässt sich bei einer Ausgestaltung des erfindungsgemäßen Vibrationssensors 1 mit Permanentmagneten 11 eine höhere Schwingungsamplitude realisieren, jedoch hat die Variante ohne Permanentmagneten 11 den Vorteil, dass mit einer niedrigeren Erregerfrequenz gearbeitet werden kann. Hierdurch lässt sich der Skin Effekt reduzieren, der zu höheren Frequenzen immer ausgeprägter wird. Daher ist die Lösung ohne Permanentmagnet 11 - energetisch betrachtet - sehr vorteilhaft.

Fig. 4 zeigt einen Längsschnitt durch eine auf gleichmäßige Magnetisierung $H_0$ optimierte Ausgestaltung des erfindungsgemäßen Vibrationssensors 1. Um eine möglichst gleichförmige Magnetisierung $H_0$ über das gesamte Volumen des magnetostriktiven Elementes 9 zu erreichen, ist der Permanentmagnet 11 so ausgestaltet (z.B. als kleine kreisförmige Scheibe), dass er in den zentralen Spulenkern 13 eingelegt werden kann. Die Lage in dem Spulenkern 13 kann dabei frei gewählt werden. Alternativ ist es möglich, den Permanentmagneten 11 als Ringmagneten auszugestalten und in den äußeren Spulenkern 22 zu integrieren. Weiterhin ist es möglich, anstelle des Permanentmagneten 11 eine zusätzliche zweite Spule zu verwenden, oder die Spule 12 mit einem überlagerten DC-Strom zu betreiben.

Der Spulenkern 13 besteht aus einem Material mit hoher magnetischer Permeabilität und weist in dem Bereich, der dem magnetostriktiven Element 9 zugewandt ist, einen Konus 20 auf. Das scheibenförmige magnetostriktive Element 9 ist so ausgestaltet, dass es im zentralen Bereich eine dem Konus 20 entsprechende Kerbe 23 aufweist, in die der Konus 20 hineinragt. In den Randbereichen des scheibenförmigen magnetostriktiven Elements 9 und in den Endbereichen des äußeren Spulenkerns 22 finden sich gleichfalls korrespondierende Abschrägungen 24. Der Konus 20 und die Abschrägungen 24 dienen der gezielten Führung der Magnetfeldlinien in das scheibenförmige magnetostriktive Element 9 hinein und aus dem scheibenförmigen magnetostriktiven Element 9 heraus, so dass der Feldlinienverlauf innerhalb des Materials in hohem Maße planparallel, bei Zylindersymmetrie radial, verläuft. Der Spulenkern 13 weist im Bereich um den Permanentmagneten 11 herum einen Brückenbereich 21 auf, der gleichfalls der optimalen Führung des von der Spule 12 erzeugten Magnetfeldes dient.

Das scheibenförmige magnetostriktive Element 9 ist beispielsweise aus Vollmaterial gefertigt. Um Wirbelströme und die daraus resultierende Verformung des Magnetfeldes H zu vermeiden, besteht das scheibenförmige magnetostriktive Element 9 bevorzugt aus laminierten Schichten. Die Laminierung kann durch eine flächige Klebeverbindung oder durch eine Löt- oder Schweiß- oder Klebeverbindung an den Kanten der Einzellamellen erfolgen.

Der äußere Spulenkern 22 hat übrigens zusätzlich die Aufgabe der magnetischen Abschirmung von externen Fremdfeldern.

Da das Magnetfeld $H_0$ des Permanentmagneten 11 im gleichen Spulenkern 13 geführt wird wie das Magnetfeld $\Delta H$ der Spule 12, sind beide Magnetfelder $H_0$, $\Delta H$ im magnetostriktiven Material des scheibenförmigen Elements 9 optimal planparallel, bei Zylindersymmetrie radial, zueinander ausgerichtet, was zu einer deutlichen Erhöhung des Wirkungsgrades führt.

Wie bereits zuvor im Zusammenhang mit Fig. 3 beschrieben, kann auf den Permanentmagneten 11 verzichtet werden, wenn die Erregerspule 12 bipolar auf der halben Resonanzfrequenz betrieben wird. Da die Magnetostriktionskurve (Fig.3) symmetrisch bezüglich H ist, wird bei jedem Nulldurchgang des Spulenstromes eine minimale Auslenkung erreicht, wodurch eine Erregung auf doppelter Frequenz generiert wird. Dieses Verfahren ermöglicht die Halbierung der Erregerfrequenz und somit eine starke Reduktion der auftretenden Wirbelströme und der damit einhergehenden Verluste. Eine alternative oder zusätzliche Reduktion der Erregerfrequenz kann dadurch erreicht werden, dass die Schwingelemente, z.B. die Gabelzinken, so optimiert sind, dass sie für den Betrieb auf Oberwellen geeignet sind.

**Bezugszeichenliste**

1    Vibrationssensor

2     schwingfähige Einheit
3     Membran
4     Innenfläche der Membran
5     Außenfläche der Membran
6     Schwingelement
7     Sende-/Empfangseinheit / elektromagnetischer Antrieb
8     Regel-/Auswerteeinheit
9     scheibenförmiges Element
10    Verbindung zwischen Membran und scheibenförmigem Element
11    Permanentmagnet
12    Spule
13    Spulenkern
14    Sensorgehäuse
15    Befestigungselement
16    Spalt
17    Schwinggabel
18    Einstab
19    Bimorphelement
20    Konus
21    Brücke
22    äußerer Spulenkern
23    Kerbe
24    Abschrägung

## Patentansprüche

1. Vorrichtung zur Bestimmung oder Überwachung eines vorgegebenen Füllstandes, der Dichte oder der Viskosität eines Mediums in einem Behälter, mit einem Gehäuse (14) und einer schwingfähigen Einheit (2), die eine Membran (3) mit einer Innenfläche (4) und einer Außenfläche (5) und ggf. zumindest ein an der Außenfläche (5) der Membran (3) befestigtes Schwingelement (6) aufweist und die auf der Höhe des vorbestimmten Füllstandes anbringbar ist oder die so in dem Behälter anbringbar ist, dass sie bis zu einer definierten Eintauchtiefe in das Medium eintaucht, wobei eine Sende-/Empfangseinheit (7) vorgesehen ist, die die schwingfähige Einheit mit einer vorgegebenen Erregerfrequenz zu Schwingungen anregt und die die Schwingungen der schwingfähigen Einheit (2) empfängt, und wobei es sich bei der Sende-/ Empfangseinheit (7) um einen elektro-magnetischen Antrieb handelt, welcher elektromagentische Antrieb zumindest eine Spule (12) und einen Spulenkern (13) umfasst, und wobei eine Regel-/Auswerteeinheit (8) vorgesehen ist, die das Erreichen des vorbestimmten Füllstandes signalisiert oder die Dichte bzw. die Viskosität des Mediums ermittelt,
**dadurch gekennzeichnet,**
**dass** ein scheibenförmiges Element (9) aus einem magnetostriktiven Material vorgesehen ist, das kraftschlüssig und flächig mit der Innenfläche (4) der Membran (3) verbunden ist, und
**dass** es sich bei der kraftschlüssigen Verbindung (10), die bei Temperaturen oberhalb 300 °C einsetzbar ist, um eine Lötung, eine Schweißung oder eine Klebung handelt, und
**dass** der elektromagnetische Antrieb (7) so innerhalb des Gehäuses (14) angeordnet ist, dass zwischen dem scheibenförmigen Element (9) aus magnetostriktivem Material und dem entsprechenden Endbereich des elektromagnetischen Antriebs (7) ein Spalt (16) vorgesehen ist.

2. Vorrichtung nach Anspruch 1,
**dadurch gekennzeichnet,**
**dass** das scheibenförmige Element (9) aus magnetostriktivem Material kreisförmig oder rechteckförmig ausgestaltet ist.

3. Vorrichtung nach Anspruch 1 oder 2, **dadurch gekennzeichnet,**
**dass** es sich bei dem Material des scheibenförmigen magnetostriktiven Elements (9) um Nickel, Kobalt, Terbium-Eisen, eine als Terfenol-D bezeichnete Legierung oder um eine als Galfenol bezeichnete Legierung handelt.

4. Vorrichtung nach Anspruch 1,
**dadurch gekennzeichnet,**

**dass** die kraftschlüssige Verbindung (10) über ein Lot realisiert wird, bei dem es sich insbesondere aus einem Standardlot auf Nickel- oder Silberbasis handelt.

5. Vorrichtung nach Anspruch 1,
   **dadurch gekennzeichnet,**
   **dass** die kraftschlüssige Verbindung (10) über einen Schweißprozess oder über einen Klebeprozess realisiert ist.

6. Vorrichtung nach Anspruch 1,
   **dadurch gekennzeichnet,**
   **dass** es sich bei dem elektromagnetischen Antrieb (7) um eine modular aufgebaute Einheit handelt, die mittels eines Befestigungsmittels (15) im Innern des Gehäuses (14) befestigt ist.

7. Vorrichtung nach Anspruch 1,
   **dadurch gekennzeichnet,**
   das der elektromagnetische Antrieb (7) einen Permanentmagneten (11) aufweist.

8. Vorrichtung nach Anspruch 1,
   **dadurch gekennzeichnet,**
   **dass** der Spalt (16) eine Dicke von 0.1-1 mm aufweist.

9. Vorrichtung nach Anspruch 1, 7 oder 8, **dadurch gekennzeichnet,**
   **dass** die Magnetfeldstärke bei Verwendung des Permanentmagneten (11) so gewählt ist, dass sie in einem Bereich liegt, in dem die relative Ausdehnung bzw. die relative Längen- bzw. Durchmesseränderung des magnetostriktiven Materials des scheibenförmigen Elements (9) in Abhängigkeit von der Magnetfeldstärke (H) des elektromagnetischen Antriebs (7) eine hohe oder eine maximale Steigung aufweist.

10. Vorrichtung nach Anspruch 1, 6, 7 oder 8,
    **dadurch gekennzeichnet,**
    **dass** bei Nicht-Verwendung eines Permanentmagneten (11) das magnetostriktive Material des scheibenförmigen Elements (9) so beschaffen ist, dass die Magnetostriktionskurve im Bereich des Nullpunkts eine hohe Steigung aufweist, die zur Erzeugung der Erregerfrequenz geeignet ist.

11. Vorrichtung nach einem oder mehreren der vorhergehenden Ansprüche,
    **dadurch gekennzeichnet,**
    **dass** die angrenzenden Bereiche von Spulenkern (13) und scheibenförmigem magnetostriktivem Element (9) so ausgestaltet sind, dass die Magnetfeldlinien im Innenbereich von Spulenkern (13) und scheibenförmigem magnetostriktivem Element (9) im Wesentlichen planparallel, bei Zylindersymmetrie radial, verlaufen.

12. Vorrichtung nach einem oder mehreren der vorhergehenden Ansprüche,
    **dadurch gekennzeichnet,**
    **dass** es sich bei der schwingfähigen Einheit (2) um eine Schwinggabel (17), einen Einstab (18) oder eine Membran (3) handelt.

**Claims**

1. Apparatus designed to determine or monitor a predefined level, density or viscosity of a medium in a vessel, with a housing (14) and a unit capable of vibration (2), which has a membrane (3) with an interior surface (4) and an exterior surface (5) and, where applicable, at least one vibration element (6) secured to the exterior surface (5) of the membrane (3), and which can be attached at the height of the predefined level, or which can be attached at the height of the predefined level or can be attached in the vessel in such a way that it is immersed in the medium up to defined immersion depth, wherein a transmission/reception unit (7) is provided which excites the unit capable of vibration to vibrate at a predefined excitation frequency and which receives the vibrations of the unit capable of vibration (2), and
   wherein the transmission/reception unit (7) is an electromagnetic drive, said electromagnetic drive having at least a coil (12) and a coil core (13), and wherein a control/evaluation unit (8) is provided that signals that the predefined level is reached or determines the density or viscosity of the medium,
   **characterized in that**

a discoidal element (9) made from a magnetostrictive material is provided, said element being connected with a non-positive connection and in a <u>planar</u> manner with the interior surface (4) of the membrane (3), and
wherein the non-positive connection (10) - which can be used at temperatures above 300 °C - is a solder, a weld or a bond, and
wherein the electromagnetic drive (7) is arranged inside the housing (14) in such a way that a gap (16) is provided between the discoidal element (9) made from the magnetostrictive material and the corresponding end area of the electromagnetic drive (7).

**2.** Apparatus as claimed in Claim 1,
**characterized in that**
the discoidal element (9) made from magnetostrictive material is circular or rectangular in design.

**3.** Apparatus as claimed in Claim 1 or 2,
**characterized in that**
the material of the discoidal magnetostrictive element (9) is nickel, cobalt, terbium iron, an alloy known as Terfenol-D or an alloy known as Galfenol.

**4.** Apparatus as claimed in Claim 1,
**characterized in that**
the non-positive connection (10) is established via a solder, particularly a standard solder on a nickel or silver base.

**5.** Apparatus as claimed in Claim 1,
**characterized in that**
the non-positive connection (10) is established via a welding process or via a bonding process.

**6.** Apparatus as claimed in Claim 1,
**characterized in that**
the electromagnetic drive (7) is a modular unit which is secured insides the housing (14) via a fastening element (15).

**7.** Apparatus as claimed in Claim 1,
**characterized in that**
the electromagnetic drive (7) is a permanent magnet (11).

**8.** Apparatus as claimed in Claim 1,
**characterized in that**
the gap (16) has a thickness of 0.1 to 1 mm.

**9.** Apparatus as claimed in Claim 1, 7 or 8,
**characterized in that**
when the permanent magnet (11) is used, the intensity of the magnetic field is selected in such a way that it is in a range in which the relative expansion and/or the relative change in the length or diameter of the magnetostrictive material of the discoidal element (9) has a high or maximum slope depending on the intensity of the magnetic field (H) of the electromagnetic drive (7).

**10.** Apparatus as claimed in Claim 1, 6, 7 or 8,
**characterized in that**
when the permanent magnet (11) is not used, the magnetostrictive material of the discoidal element (9) is such that the magnetostriction curve demonstrates a high slope in the area of the zero point, said slope being suitable for the generation of the excitation frequency.

**11.** Apparatus as claimed in one or more of the previous claims,
**characterized in that**
the adjacent zones of the coil core (13) and the discoidal magnetostrictive element (9) are designed in such a way that the magnetic field line inside the coil core (13) and the discoidal magnetostrictive element (9) are essentially plane-parallel, and radial in the case of cylindrical symmetry.

**12.** Apparatus as claimed in one or more of the previous claims,
**characterized in that**

the unit capable of vibration (2) is a tuning fork (17), a single rod (18) or a membrane (3).

**Revendications**

1.  Dispositif destiné à la détermination ou la surveillance d'un niveau prédéfini, de la densité ou de la viscosité d'un produit dans un réservoir, avec un boîtier (14) et une unité apte à vibrer (2), qui comporte une membrane (3) avec une surface intérieure (4) et une surface extérieure (5) et, le cas échéant, au moins un élément vibrant (6) fixé sur la surface extérieure (5) de la membrane (3), et laquelle unité peut être montée à la hauteur du niveau prédéterminé, ou peut être montée dans le réservoir de telle sorte que à être immergée jusqu'à une profondeur d'immersion définie dans le produit,
    dispositif pour lequel est prévue une unité d'émission / de réception (7), qui excite en vibrations l'unité apte à vibrer avec une fréquence d'excitation prédéfinie et qui reçoit les vibrations de l'unité apte à vibrer (2), et
    dispositif pour lequel il s'agit, concernant l'unité d'émission / de réception (7), d'un entraînement électromagnétique, lequel entraînement électromagnétique comprend au moins une bobine (12) et un noyau de bobine (13), et
    dispositif pour lequel est prévue une unité de régulation / d'exploitation (8), qui signale l'atteinte du niveau prédéterminé ou détermine la densité ou la viscosité du produit,
    **caractérisé**
    **en ce qu'**est prévu un élément en forme de disque (9) constitué d'un matériau magnétostrictif, lequel élément est relié par une liaison rigide et à plat avec la surface intérieure (4) de la membrane (3), et
    **en ce qu'**il s'agit, concernant la liaison rigide (10) - laquelle peut être utilisée à des températures supérieures à 300 °C - d'un brasage, d'un soudage ou d'un collage, et
    **en ce que** l'entraînement électromagnétique (7) est disposé à l'intérieur du boîtier (14) de telle sorte qu'est prévue une fente (16) entre l'élément en forme de disque (9) constitué d'un matériau magnétostrictif et la zone d'extrémité correspondante de l'entraînement électromagnétique (7).

2.  Dispositif selon la revendication 1,
    **caractérisé**
    **en ce que** l'élément en forme de disque (9) est conçu en forme circulaire ou en forme rectangulaire à partir d'un matériau magnétostrictif.

3.  Dispositif selon la revendication 1 ou 2,
    **caractérisé**
    **en ce que**, concernant le matériau de l'élément magnétostrictif en forme de disque (9), il s'agit de nickel, de cobalt, de terbium-fer, d'un alliage appelé Terfenol-D ou d'un alliage appelé Galfenol.

4.  Dispositif selon la revendication 1,
    **caractérisé**
    **en ce que** la liaison rigide (10) est réalisée via un brasage, pour lequel il s'agit notamment d'une brasure standard à base de nickel ou d'argent.

5.  Dispositif selon la revendication 1,
    **caractérisé**
    **en ce que** la liaison rigide (10) est réalisée via un procédé de soudage ou via un procédé de collage.

6.  Dispositif selon la revendication 1,
    **caractérisé**
    **en ce que**, concernant l'entraînement électromagnétique (7), il s'agit d'une unité de structure modulaire, qui est fixée à l'aide d'un moyen de fixation (15) dans l'intérieur du boîtier (14).

7.  Dispositif selon la revendication 1,
    **caractérisé**
    **en ce que** l'entraînement électromagnétique (7) est un aimant permanent (11).

8.  Dispositif selon la revendication 1,
    **caractérisé**
    **en ce que** la fente (16) présente une épaisseur de 0,1 à 1 mm.

**9.** Dispositif selon la revendication 1, 7 ou 8,
**caractérisé**
**en ce que** l'intensité du champ magnétique en cas d'utilisation de l'aimant permanent (11) est choisie de telle sorte qu'elle se situe dans une zone, dans laquelle la dilatation relative ou le changement relatif de la longueur ou du diamètre du matériau magnétostrictif de l'élément en forme de disque (9) présente en fonction de l'intensité magnétique (H) de l'entraînement électromagnétique (7) un gradient élevé ou maximal.

**10.** Dispositif selon la revendication 1, 6, 7 ou 8
**caractérisé**
**en ce qu'**en cas de non-utilisation d'un aimant permanent (11), le matériau magnétostrictif de l'élément en forme de disque (9) est conçu de telle sorte que la courbe magnétostrictive dans la zone du point zéro présente un gradient élevé, qui est approprié pour la génération de la fréquence d'excitation.

**11.** Dispositif selon l'une ou plusieurs des revendications précédentes,
**caractérisé**
**en ce que** les zones avoisinantes du noyau de bobine (13) et de l'élément magnétostrictif en forme de disque (9) sont conçues de telle sorte que les lignes de champ magnétique dans la zone intérieure du noyau de bobine (13) et l'élément magnétostrictif en forme de disque (9) sont pour l'essentiel planes et parallèles, en cas de symétrie cylindrique, radiales.

**12.** Dispositif selon l'une ou plusieurs des revendications précédentes,
**caractérisé**
**en ce que**, concernant l'unité apte à vibrer (2), il s'agit de lames vibrantes (17), d'une lame unique (18) ou d'une membrane (3).

Fig. 1a        Fig. 1b        Fig. 1c

Stand der Technik

Fig. 2

Fig. 2a

Fig. 2b

Fig. 3

EP 3 039 389 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6079266 A
- EP 1239267 A2
- DE 4327167 A1
- US 7598820 B2
- US 4770038 A
- DE 3207305 C2
- DE 102005044725 A1
- DE 102008050266 A1
- EP 0985916 A1
- EP 1281051 B1
- WO 2007113011 A
- WO 2007114950 A1
- US 3256738 A